# EUROPÄISCHE PATENTSCHRIFT

(11) **EP 3 056 781 B1**
(45) Veröffentlichungstag und Bekanntmachung des Hinweises auf die Patenterteilung: **12.06.2019**
(21) Anmeldenummer: 16151352.8
(22) Anmeldetag: 14.01.2016
(51) Int. Cl.: F16L 11/16, F01N 13/18, B26D 7/08

(54) **WICKELSCHLAUCH**
STRIP WOUND HOSE
TUYAU SPIRALÉ

(30) Priorität: 10.02.2015 DE 102015101892
(43) Veröffentlichungstag der Anmeldung: 17.08.2016
(73) Patentinhaber: Witzenmann GmbH, 75175 Pforzheim (DE)
(72) Erfinder: Rothfuß, Daniel, 75334 Straubenhardt (DE)
(74) Vertreter: Lemcke, Brommer & Partner Patentanwälte Partnerschaft mbB

(56) Entgegenhaltungen:
- EP-A1- 0 246 360
- EP-A1- 0 503 369
- EP-A1- 0 561 211
- WO-A1-2011/073686
- DE-A1- 10 340 983
- DE-A1-102011 110 219
- US-A- 919 001

## Beschreibung

Die vorliegende Erfindung betrifft einen Wickelschlauch, der aus einem in etwa S-förmig profilierten Metallband besteht, das in wendelförmigen Windungen zu einem Schlauch gewickelt ist. Das Profil des Metallbandes weist zwei im Wesentlichen axial verlaufende, radial voneinander beabstandete Wandabschnitte auf, die durch einen Steg miteinander verbunden und randseitig jeweils mit einem abgebogenen Bord versehen sind. Die Profile zweier benachbarter Windungen des Wickelschlauchs sind mittels ihrer Borde solcherart miteinander verhakt, dass sie zwischen einer Stauchlage und einer Strecklage axial gegeneinander bewegbar sind.

Die Erfindung betrifft ferner ein Verfahren zum Aufweiten und/oder Ablängen eines solchen Wickelschlauchs.

Wickelschläuche der oben genannten Art sind seit langem bekannt. Die axiale Beweglichkeit der einzelnen Windungen gegeneinander verleiht den Wickelschläuchen große Beweglichkeit bei gleichwohl hoher mechanischer Festigkeit der profilierten Windungen. Zur Herstellung solcher Wickelschläuche wird zunächst ein Metallband durch Profilieren mittels mehrerer Profilwalzenpaare zu einem im Wesentlichen S-förmigen Profil umgeformt, so dass insbesondere die Bandränder der Borde gegensinnig orientiert abgewinkelt sind. Das profilierte Metallband wird dann auf einen rotierenden Wickeldorn gewickelt, wobei die gegensinnig orientiert abgewinkelten Borde jeweils zweier benachbarter Windungen lose ineinandergreifen.

Im Stand der Technik sind Wickelschläuche bekannt, deren Windungen ein Hakenprofil aufweisen. Die Bandränder des profilierten Metallbands sind hierbei einfach abgekantet, so dass sich abgebogene Borde ergeben, an denen benachbarte Windungen lose miteinander verhakt sind. Die einzelnen Windungen greifen lose ineinander und können sich axial zwischen einer Stauchlage und einer Strecklage gegeneinander bewegen. Wickelschläuche mit Hakenprofil besitzen die größte Beweglichkeit unter den Wickelschläuchen.

Daneben sind im Stand der Technik Wickelschläuche bekannt, deren benachbarte Windungen lose miteinander verfalzt sind, indem das profilierte Metallband in Form eines Falz- oder Agraffprofils vorliegt. Hierbei sind die Borde des Metallbandprofils nicht nur in eine Richtung abgebogen, sondern ein Stück weit zurückgebogen, so dass sie mit den gegensinnig orientierten, entsprechend zurückgebogenen Borden einer benachbarten Windung lose verfalzt ineinandergreifen und eine Art beweglichen Formschluss ausbilden.

Auch bei Wickelschläuchen mit Falz- oder Agraffprofil können die Profile zweier benachbarter Windungen zwischen einer Stauchlage und einer Strecklage axial bewegt werden. Das ineinander verfalzte Profil begrenzt jedoch den axialen Bewegungsweg signifikant, und die innere Reibung zwischen den einzelnen Windungen, die axial gegeneinander bewegt werden, ist um ein Vielfaches höher als beim Hakenprofil. Im Gegenzug ist ein Wickelschlauch mit Falz- oder Agraffprofil robuster als ein Wickelschlauch mit Hakenprofil und kann beispielsweise problemlos mechanisch aufgeweitet werden.

Für viele Anwendungen von Wickelschläuchen ist die höhere Beweglichkeit und die geringere innere Reibung eines Wickelschlauchs mit Hakenprofil erwünscht. So zum Beispiel bei Verbundschläuchen, bestehend aus einem Elastomerschlauch und einem diesen außen umgebenden Wickelschlauch. Ein solcher Verbundschlauch ist in der EP 0 246 360 A1 offenbart. Als weiteres Beispiel sei die Verwendung eines Wickelschlauchs innerhalb eines flexiblen Leitungselements für die Abgasanlage eines Kraftfahrzeugs genannt, wie dies beispielsweise in der DE 103 40 983 A1 beschrieben ist. Hierbei wird der Wickelschlauch als Liner zur Strömungsführung der durchgeleiteten Gase innerhalb eines Metallbalgs eingesetzt. Neben der Strömungsführung dient der Liner außerdem zum thermischen Schutz des Metallbalgs vor den in der Regel sehr heißen durchgeleiteten Abgase des Verbrennungsmotors.

Problematisch ist hierbei die Anbindung des Wickelschlauchs innerhalb des flexiblen Leitungselements. Durch die koaxiale Anordnung von Liner und Metallbalg muss der Liner im Bereich der Balgborde des Metallbalgs aufgeweitet werden, um ihn direkt oder indirekt am Balgbord befestigen zu können. Das Aufweiten eines Wickelschlauchs mit Hakenprofil ist allerdings höchst problematisch, da hierbei die Gefahr besteht, dass beteiligte, benachbarte Windungen sich aushaken und den Halt aneinander verlieren.

Diese Problematik besteht bei allen Wickelschläuchen mit Hakenprofil, die aufgeweitet werden, unabhängig vom Anwendungsfall. Darüber hinaus haben Wickelschläuche mit Hakenprofil, die üblicherweise als Meterware produziert und transportiert sowie zur Herstellung einer Leitung abgelängt werden, die unangenehme Eigenschaft, dass ein einfacher Trennschnitt zu abstehenden Enden (Zwickeln) führt, die bei der Weiterverarbeitung problematisch sind.

Sowohl beim Trennen als auch beim Aufweiten von Wickelschläuchen mit Hakenprofil müssen daher besondere Vorkehrungen getroffen werden, wie beispielsweise der Einsatz von zusätzlichen Hülsen.

Der vorliegenden Erfindung liegt die Aufgabe zugrunde, einen Wickelschlauch vorzuschlagen, der eine höhere Beweglichkeit und/oder eine geringere innere Reibung als ein Wickelschlauch mit Falz- oder Agraffprofilen aufweist, jedoch gleichzeitig einfacher abzulängen und/oder aufzuweiten ist, als ein Wickelschlauch mit Hakenprofil nach dem Stand der Technik. Eine weitere Aufgabe besteht darin, ein Verfahren zum Ablängen und/oder Aufweiten eines Wickelschlauchs vorzuschlagen.

Gelöst sind diese Aufgaben durch einen Wickelschlauch mit den Merkmalen des Patentanspruchs 1 sowie durch ein Verfahren mit den Merkmalen des Patentanspruchs 5.

Demnach besteht ein erfindungsgemäßer Wickelschlauch aus einem in etwa S-förmig profilierten Metallband, das in wendelförmigen Windungen zu einem Schlauch gewickelt ist, wobei das Profil des Metallbandes zwei im Wesentlichen axial verlaufende, radial voneinander beabstandete Wandabschnitte aufweist, die durch einen Steg miteinander verbunden und randseitig jeweils mit einem abgebogenen Bord versehen sind. Die Profile zweier benachbarter Windungen sind mittels ihrer Borde solcherart miteinander verhakt, dass sie zwischen einer Stauchlage und einer Strecklage axial gegeneinander bewegbar sind. Sowohl der Steg als auch die Borde des Profils sind um mindestens 10 Winkelgrade gegen die radiale Richtung schräg gestellt, wobei die Borde des Profils zwischen sich und den zugehörigen axialen Wandabschnitten vorzugsweise einen Winkel zwischen 45 und 80 Winkelgraden, besonders bevorzugt zwischen 45 und 75 Winkelgraden einschließen. Die Borde sind also mehr als 90 Winkelgrade vom Metallband abgebogen, wobei sie dennoch nicht so weit zurückgebogen sind, dass sich ein Wickelschlauch mit Falzprofil ergäbe. Der erfindungsgemäße Wickelschlauch besitzt weiterhin die hohe Beweglichkeit eines Wickelschlauchs mit Hakenprofil.

Ein wesentliches Merkmal der vorliegenden Erfindung besteht in der Schrägstellung sowohl der beiden Borde als auch des Steges des profilierten Metallbands, wobei der Steg vorzugsweise in etwa dieselbe Schrägstellung aufweist, wie die Borde des profilierten Metallbands. Dementsprechend steht er bevorzugt in einem Winkel zwischen 100 und 135 Winkelgraden zu den beiden axialen Wandabschnitten.

Aufgrund der erfindungsgemäßen Schrägstellungen sowohl der Borde als auch des Steges des profilierten Metallbands ist es möglich, das erfindungsgemäße Verfahren zum Ablängen und/oder Aufweiten eines Wickelschlauchs durchzuführen: Erfindungsgemäß wird hierzu der Wickelschlauch in einem Verpressbereich solcherart radial verpresst, dass die Borde zweier benachbarter Windungen nach dem Verpressen zwischen sich und den zugehörigen axialen Wandabschnitten einen Winkel von weniger als 45 Winkelgraden einschließen, wonach der Wickelschlauch im Verpressbereich abgelängt und/oder aufgeweitet wird.

Die Schrägstellung der Borde und die außerdem vorhandene Schrägstellung des Steges ermöglichen ein solches radiales Verpressen. Denn beim radialen Verpressen legt sich der schon zu Beginn schräg gestellt Steg zumindest teilweise flach, und gleichzeitig werden die Borde wie bei einem Agraffprofil ineinander verfalzt. Letzteres wird durch das Flachlegen des Stegs und die damit einhergehende Verbreiterung des Profils des Metallbands unterstützt. Gleichzeitig verringert sich durch die Schrägstellung des Stegs der Widerstand des Profils gegen das radiale Verpressen, und durch das Flachlegen des Stegs ergeben sich beim radialen Verpressen reproduzierbare Verhältnisse. Diese Vorteile werden erfindungsgemäß mit einem Profil des Metallbands erzielt, das eine mittlere Kastenhöhe aufweist, die größer ist als ein Viertel einer Profilbreite, die im Wesentlichen einer maximalen axialen Ausdehnung des Profils entspricht. Die Kastenhöhe entspricht hierbei im Wesentlichen der radialen Ausdehnung eines abgebogenen Bords, die in der Regel etwas kleiner als der radiale Abstand zwischen den beiden axialen Wandabschnitten des Profils ist. Eine solche Geometrie des profilierten Metallbands ermöglicht ein erfindungsgemäßes radiales Verpressen zum Zwecke eines Aufweitens und/oder Ablängens des Wickelschlauchs ohne besondere Maßnahmen beim Verpressen; die erwünschte radiale Überlappung benachbarter Profile ergibt sich mit dieser Geometrie beim radialen Verpressen zwangsläufig.

Der erfindungsgemäße Wickelschlauch verformt sich beim Durchführen des erfindungsgemäßen Verfahrens im Verpressbereich also in einen relativ bewegungsstabilen, formschlüssig ineinander verfalzten Wickelschlauch, der sowohl problemlos aufgeweitet als auch problemlos abgelängt werden kann; letzteres beispielsweise in einem Laser-Trenn-Automaten. Beim Aufweiten bleibt der Eingriff zweier benachbarter Windungen des Wickelschlauchs ineinander bestehen, da die radiale Verpressung aufgrund der erfindungsgemäßen Geometrie des Wickelschlauchs zuverlässig zu radialen Überlappungen der einzelnen Windungen führt.

Im Rahmen des erfindungsgemäßen Verfahrens ist es wesentlich, das Aufweiten oder Ablängen des Wickelschlauchs innerhalb des Verpressbereichs durchzuführen, also nicht etwa den gesamten Verpressbereich aufzuweiten.

Ein unkompliziertes radiales Verpressen ermöglicht der erfindungsgemäße Wickelschlauch auch dann, wenn er, was im Rahmen der vorliegenden Erfindung bevorzugt ist, solcherart ausgeformt ist, dass eine mittlere Länge der Borde des Profils größer ist als die Hälfte einer mittleren Länge der axialen Wandabschnitte des Profils. Hierdurch ist ein radiales Überlappen und damit ein formschlüssiges Ineinander-Verfalzen der Borde zweier benachbarter Windungen des Wickelschlauchs gewährleistet, ohne auf besondere Randbedingungen beim radialen Verpressen achten zu müssen.

Wie an sich bekannt, ist es auch im Rahmen der vorliegenden Erfindung bevorzugt, wenn das Profil des Metallbandes im Wesentlichen rotationssymmetrisch ausgebildet ist, wobei der Symmetriepunkt in der Regel in der Mitte des Stegs liegt.

Eine besonders bevorzugte Verwendung des erfindungsgemäßen Wickelschlauchs besteht darin, ihn koaxial innerhalb eines Metallbalgs anzuordnen und hierdurch ein flexibles Leitungselement zu schaffen, das insbesondere in einer Abgasleitung eines Verbrennungsmotors verwendet wird. Hierbei ist es bevorzugt, mittels des erfindungsgemäßen Verfahrens den Wickelschlauch im Bereich eines Balgbords des Metallbalgs radial zu verpressen und den Wickelschlauch innerhalb des hierdurch entstandenen Verpressbereichs aufzuweiten, um ihn dann direkt oder indirekt mit dem Balgbord verbinden zu können, während er gleichwohl innerhalb des Metallbalgs radial von diesem beabstandet verläuft und dort seine besonders hohe Beweglichkeit zum Tragen kommt.

Im Folgenden wird die vorliegende Erfindung anhand eines lediglich exemplarisch in den beiliegenden Figuren dargestellten Ausführungsbeispiels für einen erfindungsgemäß ausgestalteten Wickelschlauch weiter verdeutlicht. Es zeigen:
- Figur 1: einen Schnitt durch eine Wandung eines erfindungsgemäß ausgestalteten Wickelschlauchs in Strecklage;
- Figur 2: einen Schnitt wie Figur 1, jedoch in einer Stauchlage des Wickelschlauchs;
- Figur 3: einen Schnitt wie Figur 1, jedoch nach einem radialen Verpressen des dargestellten Abschnitts des Wickelschlauchs;
- Figuren 4a und 4b: zwei Schnitte wie die Figuren 1 und 2, mit einer leicht anderen Ausführungsform eines erfindungsgemäßen Wickelschlauchs, zur Verdeutlichung der Nomenklatur.

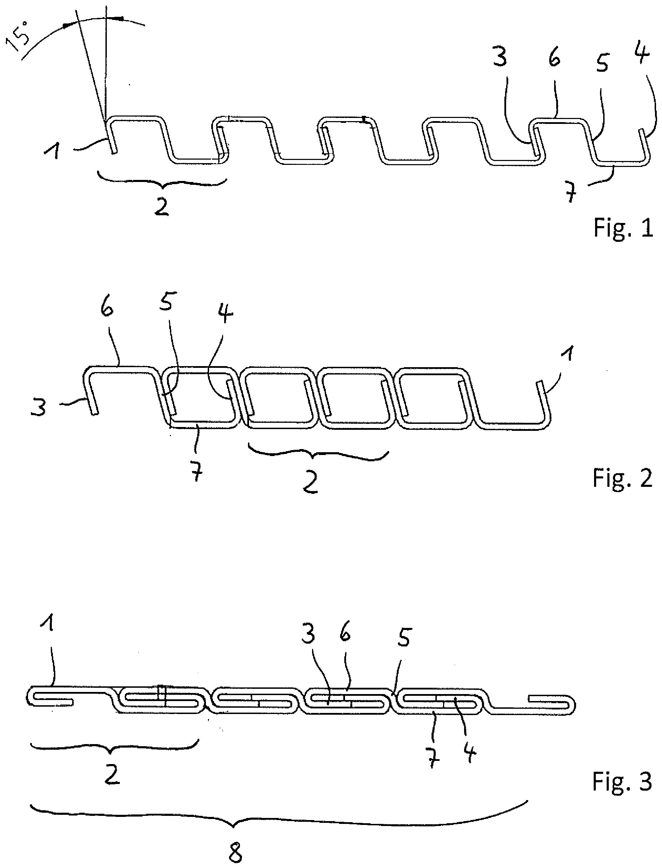

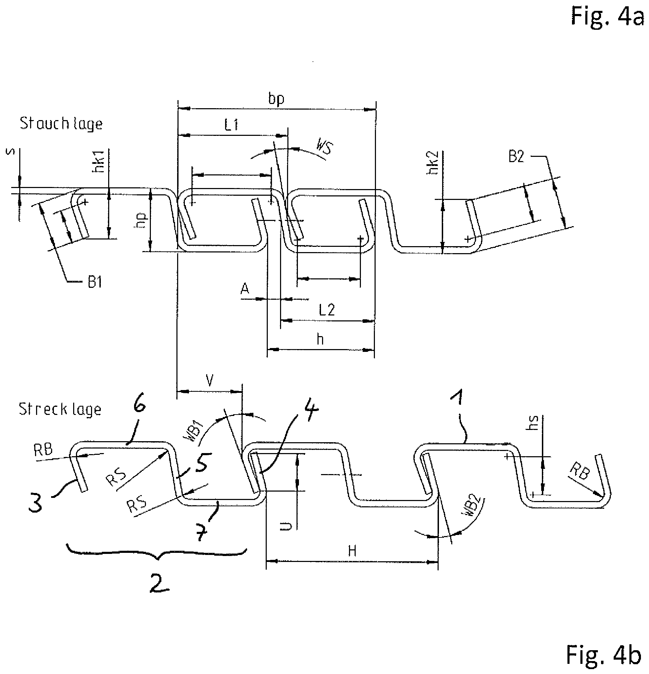

Das in den Figuren 1 bis 4 dargestellte Stück eines Wickelschlauchs besteht aus mehreren Windungen 2 eines profilierten Metallbandes 1. Dessen Profil weist zwei axial verlaufende Wandabschnitte 6, 7 auf, die durch einen Steg 5 miteinander verbunden sind. Randseitig ist das profilierte Metallband 1 mit jeweils einem abgebogenen Bord 3, 4 versehen, mittels denen zwei benachbarte Windungen 2 des profilierten Metallbands 1 ineinander verhakt sind, so dass die Windungen 2 zwischen einer Stauchlage (Figur 2, Figur 4a) und einer Strecklage (Figur 1, Figur 4b) gegeneinander beweglich sind.

Die Figuren 4a und 4b zeigen einen Schnitt durch einen Teil eines erfindungsgemäß ausgestalteten Wickelschlauchs in Stauchlage (Figur 4a) bzw. Strecklage (Figur 4b), wobei der hier dargestellte Wickelschlauch aus einem profilierten Metallband 1 besteht, dessen Profil nicht rotationssymmetrisch ausgebildet ist. Anhand dieser Darstellungen wird die im Rahmen dieser Beschreibung verwendete Nomenklatur verdeutlicht. Es bedeuten:
- s: Banddicke des Metallbands
- hp: Profilhöhe
- bp: Profilbreite
- L1: erste Kastenlänge
- L2: zweite Kastenlänge
- B1: erste Bordlänge
- B2: zweite Bordlänge
- H: Steigung des Wickelschlauchs in Strecklage
- h: Steigung des Wickelschlauchs in Stauchlage
- V: axialer Verschiebeweg zwischen der Stauchlage und der Strecklage
- U: Überlappung
- A: Asymmetrie
- RB: Bordradius
- RS: Stegradius
- hs: Steghöhe
- WS: Stegwinkel
- WB1: erster Bordwinkel
- WB2: zweiter Bordwinkel
- hk1: erste Kastenhöhe
- hk2: zweite Kastenhöhe.

Das in den Figuren 1 und 2 dargestellte Ausführungsbeispiel eines erfindungsgemäß ausgestalteten Wickelschlauchs ist hingegen symmetrisch ausgebildet, d.h. das Profil jeder Windung 2 des Metallbandes 1 ist punktsymmetrisch geformt, so dass die erste Kastenlänge L1 und die zweite Kastenlänge L2 sowie die erste Bordlänge b1 und die zweite Bordlänge b2 jeweils gleich sind. Dies ist gegenüber dem Ausführungsbeispiel aus den Figuren 4a und 4b bevorzugt.

Darüber hinaus ist das in Figur 1 in Strecklage und in Figur 2 in Stauchlage dargestellte Profil des Wickelschlauchs auch solcherart symmetrisch aufgebaut, dass die Schrägstellung der beiden Borde 3, 4 identisch mit der Schrägstellung des Stegs 5 des Profils ist, d.h. es gilt: WB1 = WB2 = WS. Im vorliegenden Ausführungsbeispiel gilt darüber hinaus: WB1 = WB2 = WS = 15°. Dies führt hier dazu, dass beide Borde 3, 4 zwischen sich und dem jeweils zugehörigen axialen Wandabschnitt 6, 7 jeweils einen Winkel von 90° - WB1 = 90° - 15° = 75° einschließen, während der Steg 5 in einem Winkel von 90° + WS = 90° + 15° = 105° zu den axialen Wandabschnitten 6, 7 steht.

Durch die identischen Winkel sowohl beider Borde 3, 4 als auch des Stegs 5 ist trotz der erfindungsgemäßen Schrägstellung ein maximaler Verschiebeweg zwischen der in Figur 1 dargestellten Strecklage und der in Figur 2 dargestellten Stauchlage des Wickelschlauchs gegeben. Das in den Figuren 1 und 2 dargestellte Ausführungsbeispiel eines erfindungsgemäßen Wickelschlauchs besitzt daher die volle Beweglichkeit eines Wickelschlauchs mit Hakenprofil.

Durch eine einfache radiale Verpressung des in den Figuren 1 und 2 dargestellten Wickelschlauchs ergibt sich ein Verpressbereich 8, der in Figur 3 dargestellt ist. Die beiden Borde 3, 4 zweier benachbarter Windungen 2 des Profils haben sich unter Vergrößerung des Winkels WB1 bzw. WB2 im Wesentlichen flachgelegt und ineinander verfalzt, so dass die einzelnen Windungen 2 des Wickelschlauchs einen stabilen Formschluss untereinander bilden. Der Steg 5 hat sich durch das Verpressen teilweise flachgelegt, wodurch sich die axialen Wandabschnitte 6, 7 entsprechend verlängert haben; durch die Materialdopplung im Bereich der Borde 3, 4, die radial überlappend ineinander verfalzt sind, blieb letztlich ein Rest des Stegs 5 übrig, der die nach wie vor leicht radial voneinander beabstandeten axialen Wandabschnitte 6, 7 miteinander verbindet.

Wie Figur 3 verdeutlicht, kann der hier dargestellte Verpressbereich 8 des radial verpressten, in den Figuren 1 und 2 dargestellten Wickelschlauchs problemlos innerhalb des Verpressbereichs 8 aufgeweitet werden, ohne den Zusammenhalt zweier benachbarter Windungen des Profils 2 zu gefährden. Auch ein unkompliziertes Ablängen innerhalb des Verpressbereichs 8 ist ohne weiteres möglich.

## Patentansprüche

1. Wickelschlauch, bestehend aus einem in etwa S-förmig profilierten Metallband (1), das in wendelförmigen Windungen (2) zu einem Schlauch gewickelt ist, wobei das Profil des Metallbandes (1) zwei im Wesentlichen axial verlaufende, radial voneinander beabstandete Wandabschnitte (6, 7) aufweist, die durch einen Steg (5) miteinander verbunden und randseitig jeweils mit einem abgebogenen Bord (3, 4) versehen sind, wobei eine Kastenhöhe (hk1, hk2) des Profils, die im Wesentlichen der kleineren der radialen Ausdehnungen der Borde (3, 4) entspricht, größer ist als ein Viertel einer Profilbreite (bp), die im Wesentlichen einer maximalen axialen Ausdehnung des Profils entspricht und wobei die Profile jeweils zweier benachbarter Windungen (2) mittels ihrer Borde (3, 4) solcherart miteinander verhakt sind, dass sie zwischen einer Stauchlage und einer Strecklage des Wickelschlauchs axial gegeneinander bewegbar sind,
**dadurch gekennzeichnet,**
**dass** sowohl der Steg (5) als auch die Borde (3, 4) des Profils (2) um mindestens 10 Winkelgrade gegen eine radiale Richtung schräggestellt sind.

2. Wickelschlauch nach Anspruch 1,
**dadurch gekennzeichnet,**
**dass** die Borde (3, 4) des Profils zwischen sich und den zugehörigen axialen Wandabschnitten (6, 7) einen Winkel zwischen 45 und 80 Winkelgraden, vorzugsweise zwischen 45 und 75 Winkelgraden einschließen.

3. Wickelschlauch nach einem der Ansprüche 1 oder 2,
**dadurch gekennzeichnet,**
**dass** eine mittlere Länge (B1, B2) der Borde (3, 4) des Profils (2) größer ist als die Hälfte einer mittleren Länge (L1, L2) der axialen Wandabschnitte (6, 7) des Profils.

4. Wickelschlauch nach mindestens einem der Ansprüche 1 bis 3,
**dadurch gekennzeichnet,**
**dass** das Profil im Wesentlichen rotationssymmetrisch ausgebildet ist.

5. Verfahren zum Ablängen und/oder Aufweiten eines Wickelschlauchs, der aus einem in etwa S-förmig profilierten Metallband (1) besteht, das in wendelförmigen Windungen (2) zu einem Schlauch gewickelt ist, wobei das Profil des Metallbandes (1) zwei im Wesentlichen axial verlaufende, radial voneinander beabstandete Wandabschnitte (6, 7) aufweist, die durch einen Steg (5) miteinander verbunden und randseitig jeweils mit einem abgebogenen Bord (3, 4) versehen sind, und wobei die Profile jeweils zweier benachbarter Windungen (2) mittels ihrer Borde (3, 4) solcherart untereinander verhakt sind, dass sie zwischen einer Stauchlage und einer Strecklage axial gegeneinander bewegbar sind,
**dadurch gekennzeichnet,**
**dass** ein Wickelschlauch nach mindestens einem der Ansprüche 1 bis 4 verwendet wird, und dass der Wickelschlauch in einem Verpressbereich (8) solcherart radial verpresst wird, dass die Borde (3, 4) zweier benachbarter Windungen (2) nach dem Verpressen zwischen sich und den zugehörigen axialen Wandabschnitten (6, 7) einen Winkel mit weniger als 45 Winkelgraden einschließen, wonach der Wickelschlauch im Verpressbereich (8) abgelängt und/oder aufgeweitet wird.

6. Verwendung eines Wickelschlauchs nach mindestens einem der Ansprüche 1 bis 4 in einem flexiblen Leitungselement mit einem den Wickelschlauch koaxial umgebenden Metallbalg, insbesondere für eine Abgasleitung eines Verbrennungsmotors.

7. Verwendung eines Wickelschlauchs nach Anspruch 6,
**dadurch gekennzeichnet,**
**dass** der Wickelschlauch mit einem Verfahren nach Anspruch 6 aufgeweitet wird und im aufgeweiteten Bereich direkt oder indirekt mit dem Metallbalg verbunden wird.

## Claims

1. Stripwound hose, consisting of a metal strip (1) having an approximately S-shaped profile which has been wound in helical windings (2) to form a hose, the profile of the metal strip (1) having two substantially axially extending wall portions (6, 7) which are radially spaced apart from one another, which wall portions are connected to one another by a web (5) and are each provided at an edge with a bent-over rim (3, 4), wherein a box height (hk1, hk2) of the profile, which height corresponds substantially to the smaller of the radial extents of the rims (3, 4), is greater than a quarter of a profile width (bp), which width corresponds substantially to a maximum axial extent of the profile, and wherein the profiles of each two adjacent windings (2) are interlocked with one another by means of their rims (3, 4) in such a way that they are movable axially relative to one another between a compressed position and an extended position of the stripwound hose,
**characterised in that**
both the web (5) and the rims (3, 4) of the profile (2) are inclined with respect to a radial direction by at least 10 angular degrees.

2. Stripwound hose according to claim 1,
**characterised in that**
the rims (3, 4) of the profile enclose between themselves and the associated axial wall portions (6, 7) an angle of between 45 and 80 angular degrees, preferably between 45 and 75 angular degrees.

3. Stripwound hose according to either one of claims 1 and 2,
**characterised in that**
a mean length (B1, B2) of the rims (3, 4) of the profile (2) is greater than half of a mean length (L1, L2) of the axial wall portions (6, 7) of the profile.

4. Stripwound hose according to at least one of claims 1 to 3,
**characterised in that**
the profile is of substantially rotationally symmetrical construction.

5. Method for cutting to length and/or widening a stripwound hose which consists of a metal strip (1) having an approximately S-shaped profile which has been wound in helical windings (2) to form a hose, the profile of the metal strip (1) having two substantially axially extending wall portions (6, 7) which are radially spaced apart from one another, which wall portions are connected to one another by a web (5) and are each provided at an edge with a bent-over rim (3, 4), and the profiles of each two adjacent windings (2) being interlocked with one another by means of their rims (3, 4) in such a way that they are movable axially relative to one another between a compressed position and an extended position,
**characterised in that**
a stripwound hose according to at least one of claims 1 to 4 is used, and the stripwound hose is compressed radially in a compression region (8) in such a way that, after the compression, the rims (3, 4) of two adjacent windings (2) enclose between themselves and the associated axial wall portions (6, 7) an angle of less than 45 angular degrees, whereupon the stripwound hose is cut to length and/or widened in the compression region (8).

6. Use of a stripwound hose according to at least one of claims 1 to 4 in a flexible duct element having a metal bellows which coaxially surrounds the stripwound hose, especially for an exhaust gas duct of an internal combustion engine.

7. Use of a stripwound hose according to claim 6,
**characterised in that**
the stripwound hose is widened using a method according to claim 6 and in the widened region is directly or indirectly connected to the metal bellows.

## Revendications

1. Flexible à ondes longitudinales, constitué d'un feuillard métallique (1) profilé approximativement en forme de S qui est enroulé en spires hélicoïdales (2) pour former un flexible, sachant que le profil du feuillard métallique (1) présente deux parties formant parois (6, 7) s'étendant pour l'essentiel axialement, radialement distantes l'une de l'autre, qui sont reliées l'une à l'autre par une partie de liaison (5) et qui sont chacune pourvues sur leur bord d'un rebord replié (3, 4), sachant qu'une hauteur de caisson (hk1, hk2) du profil, qui correspond pour l'essentiel à la plus petite des étendues radiales des rebords (3, 4), est supérieure à un quart d'une largeur de profil (bp) qui correspond pour l'essentiel à une étendue axiale maximale du profil, et sachant que les profils de deux spires voisines (2) sont chaque fois accrochés l'un à l'autre au moyen de leurs rebords (3, 4) de telle sorte qu'ils peuvent être déplacés axialement l'un par rapport à l'autre entre une position contractée et une position étirée,
**caractérisé en ce que** tant la partie de liaison (5) que les rebords (3, 4) du profil (2) sont inclinés d'au moins 10 degrés d'angle par rapport à une direction radiale.

2. Flexible à ondes longitudinales selon la revendication 1, **caractérisé en ce que** les rebords (3, 4) du profil forment entre eux et les parties axiales formant parois associées (6, 7) un angle compris entre 45 et 80 degrés d'angle, de préférence entre 45 et 75 degrés d'angle.

3. Flexible à ondes longitudinales selon l'une des revendications 1 ou 2, **caractérisé en ce qu'**une longueur moyenne (B1, B2) des rebords (3, 4) du profil (2) est supérieure à la moitié d'une longueur moyenne (L1, L2) des parties axiales formant parois (6, 7) du profil.

4. Flexible à ondes longitudinales selon au moins une des revendications 1 à 3, **caractérisé en ce que** le profil est réalisé pour l'essentiel à symétrie de révolution.

5. Procédé pour mettre à longueur et/ou élargir un flexible à ondes longitudinales, qui est constitué d'un feuillard métallique (1) profilé approximativement en forme de S qui est enroulé en spires hélicoïdales (2) pour former un flexible, sachant que le profil du feuillard métallique (1) présente deux parties formant parois (6, 7) s'étendant pour l'essentiel axialement, radialement distantes l'une de l'autre, qui sont reliées l'une à l'autre par une partie de liaison (5) et qui sont chacune pourvues sur leur bord d'un rebord replié (3, 4), et sachant que les profils de deux spires voisines (2) sont chaque fois accrochés l'un à l'autre au moyen de leurs rebords (3, 4) de telle sorte qu'ils peuvent être déplacés axialement l'un par rapport à l'autre entre une position contractée et une position étirée,
**caractérisé en ce qu'**on utilise un flexible à ondes longitudinales selon au moins une des revendications 1 à 4, et **en ce que** le flexible à ondes longitudinales est, dans une région de compression (8), comprimé radialement de telle sorte que les rebords (3, 4) de deux spires voisines (2), à la suite de la compression, forment entre eux et les parties axiales formant parois associées (6, 7) un angle inférieur à 45 degrés d'angle, à la suite de quoi le flexible à ondes longitudinales est mis à longueur et/ou élargi dans la région de compression (8).

6. Utilisation d'un flexible à ondes longitudinales selon au moins une des revendications 1 à 4 dans un élément de conduite flexible avec un soufflet métallique entourant coaxialement le flexible à ondes longitudinales, en particulier pour une conduite d'échappement d'un moteur thermique.

7. Utilisation d'un flexible à ondes longitudinales selon la revendication 6, **caractérisée en ce que** le flexible à ondes longitudinales est élargi par un procédé selon la revendication 5, et est relié directement ou indirectement au soufflet métallique dans la région élargie.
